# EUROPEAN PATENT APPLICATION

(11) **EP 4 742 081 A1**
(43) Date of publication of application: **13.05.2026**
(21) Application number: 25213989.4
(22) Date of filing: 06.11.2025
(51) Int. Cl.: G06F 30/392

(54) **FRONT-END-OF-LINE FLOORPLAN OF INTEGRATED CIRCUIT THAT HAS DUMMIES INSERTED BY BLOCKAGE-AIDED DUMMY INSERTION AND RELATED METHOD**

(30) Priority: 07.11.2024 US 202463717829 P
(71) Applicant: MEDIATEK INC., Hsinchu City 30078 (TW)
(72) Inventor: TSAI, Yi-Chun, 30078 Hsinchu City (TW); GUO, Yi, 138628 Singapore (SG); LIU, Hsu-Hua, 30078 Hsinchu City (TW); ZHANG, Shuyuan, Singapore 138628 (SG); CHENG, Chieh-Jou, 30078 Hsinchu City (TW); WONG, Kian Loo, 138628 Singapore (SG); CHANG, Yi-Ping, 30078 Hsinchu City (TW); CHEN, Yi-Jung, 30078 Hsinchu City (TW); CHEN, Szu-Ying, 30078 Hsinchu City (TW); HUANG, Shao-Hua, 30078 Hsinchu City (TW); HSU, Wei-Min, 30078 Hsinchu City (TW); CHANG, Chi-Hsin, 30078 Hsinchu City (TW); SIM, Vanessa Kim Ann, 138628 Singapore (SG); LIN, Shih-Yun, 30078 Hsinchu City (TW); DIA, Kin Hooi, 30078 Hsinchu City (TW); YANG, Jen-Hang, 30078 Hsinchu City (TW); PUA, Siaw Fuang, 138628 Singapore (SG); CHIU, Yi-Te, 30078 Hsinchu City (TW)
(74) Representative: Pfenning, Meinig & Partner mbB

(57) **Abstract**

A front-end-of-line, FEOL, floorplan (200) of an integrated circuit includes a plurality of FEOL components (202, 204, 206, 208), a non-rectangle-shaped empty region, a first FEOL dummy (218), and a second FEOL dummy (216). The non-rectangle-shaped empty region is located between the FEOL components (202, 204, 206, 208), and includes a first empty region (212) in a first direction and a second empty region (210) in a second direction perpendicular to the first direction, where the first empty region (212) has a first end connected to the second empty region (210). The first FEOL dummy (218) is inserted in the first empty region (212). The second FEOL dummy (216) is inserted in the second empty region (210). The first FEOL dummy (218) is separated from the second FEOL dummy (216) at the first end of the first empty region (212).

## Description

### Field of the Invention

The present invention relates to an integrated circuit (IC) design, and more particularly, to a front-end-of-line (FEOL) floorplan of an IC that has FEOL dummies inserted by blockage-aided FEOL dummy insertion and a related method.

### Background of the Invention

IC fabrication is a complex semiconductor process during which electronic circuits are created in and on a wafer. The semiconductor process is a multiple-step sequence which can be divided into two major processing stages, namely an FEOL process and a back-end-of-line (BEOL) process. The FEOL process refers to the construction of the components (e.g., transistors) of the IC directly inside the wafer. Specifically, the FEOL process focuses on forming electronic device structures that define IC's basic functions. Since the FEOL process is the first stage of the semiconductor process, it sets the foundation for the subsequent stages, including the BEOL process. Specifically, once all the components of the IC are ready, the BEOL process is performed to deposit the metal wiring between the individual components in order to interconnect them. After the BEOL process, a back-end process (also called post-fab process) is performed, which includes wafer testing, die separation, die testing, IC packaging, and final testing.

An FEOL floorplan of an IC includes a plurality of FEOL components. For example, an FEOL component may be a macro, a static random access memory (SRAM), an intellectual property (IP) cell, or a standard cell region. It is possible that FEOL components with different dimensions (e.g., different widths and/or different heights) may be included in the FEOL floorplan, resulting in a non-rectangle shaped empty region (e.g., a Z-shaped empty region) between non-identical FEOL components. When the non-rectangle shaped empty region has a minimum horizontal/vertical width specified by design rules of a semiconductor foundry, a dummy insertion utility provided by the semiconductor foundry has dummy insertion utility limitations, and may have difficult in inserting horizontal/vertical dummies into the non-rectangle shaped empty region. In other words, dummy insertion cannot work in the non-rectangle shaped empty region with minimum spacing, which causes design rule checking (DRC) violation. One conventional approach is to redo the FEOL floorplan to enlarge the empty region for accommodating FEOL dummies inserted by the dummy insertion utility provided by the semiconductor foundry. After the designer enlarges the empty region by redoing the FEOL floorplan, he/she needs to redo placement, clock tree synthesis (CTS), routing, and physical verification (PV) again. As a result, the conventional approach increases the die area as well as the time to market.

### Summary of the Invention

This in mind, the present invention aims at providing an FEOL floorplan of an IC that has a non-rectangle shaped empty region with FEOL dummies inserted by blockage-aided FEOL dummy insertion and a related method.

This is achieved by the FEOL floorplan and the method according to independent claims, The dependent claims pertain to corresponding further developments and improvements. The invention is set out in the appended set of claims.

As will be seen more clearly from the detailed description following below, the claimed FEOL floorplan includes a plurality of FEOL components, a non-rectangle-shaped empty region, a first FEOL dummy, and a second FEOL dummy. The non-rectangle-shaped empty region is located between the plurality of FEOL components, and includes a first empty region in a first direction and a second empty region in a second direction perpendicular to the first direction, wherein the first empty region has a first end connected to the second empty region. The first FEOL dummy is inserted in the first empty region. The second FEOL dummy is inserted in the second empty region. The first FEOL dummy is separated from the second FEOL dummy at the first end of the first empty region.

The claimed method of designing an FEOL floorplan of an integrated circuit includes: defining a plurality of FEOL components in the FEOL floorplan, wherein a non-rectangle-shaped empty region is located between the plurality of FEOL components, and includes a first empty region in a first direction and a second empty region in a second direction perpendicular to the first direction, wherein the first empty region has a first end connected to the second empty region; placing a first FEOL blockage at the first end of the first empty region; and running a dummy insertion utility to automatically insert a first FEOL dummy and a second FEOL dummy, wherein the first FEOL blockage assists the dummy insertion utility in inserting the first FEOL dummy in the first empty region only.

### Brief Description of the Drawings

In the following, the invention is further illustrated by way of example, taking reference to the accompanying drawings. Thereof
FIG. 1 is a flowchart illustrating a method of designing an FEOL floorplan of an IC according to an embodiment of the present invention,
FIG. 2 is a diagram illustrating a first FEOL floorplan of an IC according to an embodiment of the present invention, and
FIG. 3 is a diagram illustrating a second FEOL floorplan of an IC according to an embodiment of the present invention.

### Detailed Description

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ...". Also, the term "couple" is intended to mean either an indirect or direct electrical connection. Accordingly, if one device is coupled to another device, that connection may be through a direct electrical connection, or through an indirect electrical connection via other devices and connections.

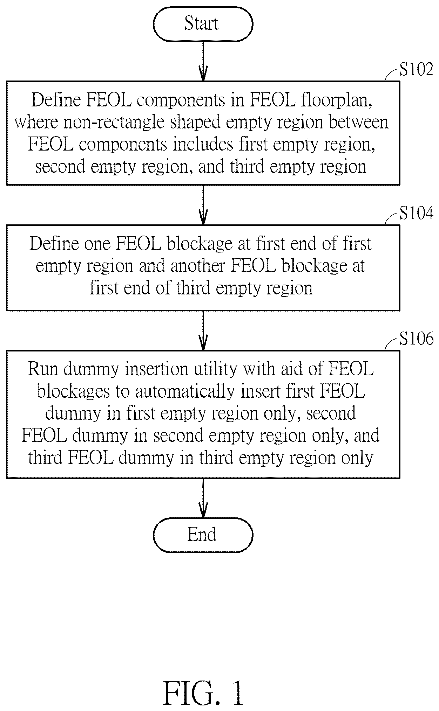

FIG. 1 is a flowchart illustrating a method of designing an FEOL floorplan of an IC according to an embodiment of the present invention. Provided that the result is substantially the same, the steps are not required to be executed in the exact order shown in FIG. 1. In step S102, IC design software defines a plurality of FEOL components (e.g., macros/SRAMs/IP cells/standard cell regions) in the FEOL floorplan according to a user input from an operator (i.e., an IC designer) of the IC design software. FEOL components with different dimensions (e.g., different widths and/or different heights) are included in the same FEOL floorplan, resulting in a non-rectangle-shaped empty region (e.g., a Z-shaped empty region) located between the non-identical FEOL components. For example, the non-rectangle-shaped empty region may include at least a first empty region, a second empty region, and a third empty region, where the first empty region has a first end connected to the second empty region, and the third empty region has a first end connected to the second empty region. Each of the first empty region and the third empty region is in a first direction, and the second empty region is in a second direction perpendicular to the first direction.

For example, the first direction may be a horizontal direction of the FEOL floorplan, and the second direction may be a vertical direction of the FEOL floorplan. In some embodiments of the present invention, one or both of the first empty region and the third empty region (i.e., horizontal empty regions) may have a minimum vertical width specified by design rules of the semiconductor foundry, and/or the second empty region (i.e., vertical empty region) may have a minimum horizontal width specified by design rules of the semiconductor foundry.

For another example, the first direction may be a vertical direction of the FEOL floorplan, and the second direction may be a horizontal direction of the FEOL floorplan. In some embodiments of the present invention, one or both of the first empty region and the third empty region (i.e., vertical empty regions) may have a minimum horizontal width specified by design rules of the semiconductor foundry, and/or the second empty region (i.e., horizontal empty region) may have a minimum vertical width specified by design rules of the semiconductor foundry.

In step S104, the IC design software defines a first FEOL blockage at the first end of the first empty region and a second FEOL blockage at the first end of the third empty region according to a user input from the operator (i.e., IC designer) of the IC design software. Each of the first FEOL blockage and the second FEOL blockage acts as a dummy insertion blockage intentionally added to guide automatic dummy insertion that is applied to the non-rectangle shaped empty region without user intervention.

In step S106, the IC design software runs a dummy insertion utility (which is a tool provided by the semiconductor foundry) with aid of FEOL blockages to automatically insert a first FEOL dummy, a second FEOL dummy, and a third FEOL dummy. Specifically, the first FEOL blockage assists the dummy insertion utility in inserting the first FEOL dummy in the first empty region only, and the second FEOL blockage assists the dummy insertion utility in inserting the third FEOL dummy in the third empty region only. It should be noted that manually inserting FEOL dummies into the FEOL floorplan is not recommended due to the fact that it may trigger other DRC errors with manually drawn patterns. The present invention proposes using the dummy insertion utility (which is a tool provided by the semiconductor foundry) to deal with automatic dummy insertion and adding FEOL blockages to guide the automatic dummy insertion for allowing FEOL dummies to be successfully filled in the non-rectangle shaped empty region in the presence of inherent dummy insertion utility limitations. For example, one of the inherent dummy insertion utility limitations is that the dummy insertion utility does not start insertion of vertical FEOL dummies until insertion of all horizontal FEOL dummies is completed. For another example, one of the inherent dummy insertion utility limitations is that the dummy insertion utility does not start insertion of horizontal FEOL dummies until insertion of all vertical FEOL dummies is completed. However, these are for illustrative purposes only, and are not meant to be limitations of the present invention. In practice, dummy insertion utility limitations are foundry-dependent. That is, dummy insertion utilities provided by different semiconductor foundries may have different dummy insertion utility limitations.

Any FEOL floorplan having a non-rectangle shaped empty region with FEOL dummies inserted by the proposed blockage-aided FEOL dummy insertion scheme falls within the scope of the present invention. For better comprehension of technical features of the proposed blockage-aided FEOL dummy insertion scheme, two FEOL floorplan examples are described as below with reference to the accompanying drawings.

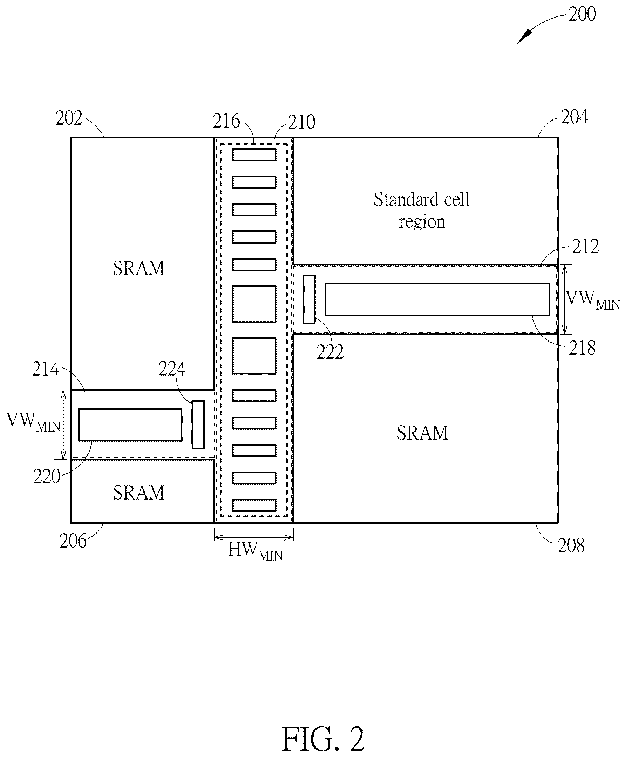

FIG. 2 is a diagram illustrating a first FEOL floorplan of an IC according to an embodiment of the present invention. The FEOL floorplan 200 includes FEOL components such as multiple SRAMs 202, 206, 208 and one standard cell region 204. However, this is for illustrative purposes only, and is not meant to be a limitation of the present invention. In practice, the present invention has no limitations on FEOL components included in the same FEOL floorplan. Since the FEOL components have different dimensions, there is a non-rectangle shaped empty region between FEOL components. In this embodiment, the non-rectangle shaped empty region includes a vertical empty region 210 and two horizontal empty regions 212 and 214. In addition, the vertical empty region 210 has a minimum horizontal width HW_{MIN} specified by design rules of the semiconductor foundry, and each of the horizontal empty regions 212 and 214 has a minimum vertical width VW_{MIN} specified by design rules of the semiconductor foundry.

The horizontal empty region 212 has a left end connected to the vertical empty region 210, and an FEOL blockage 222 is defined at the left end of the horizontal empty region 212. Hence, when a dummy insertion utility (which is a tool provided by the semiconductor foundry) automatically inserts a horizontal FEOL dummy 218 in the horizontal empty region 212, the FEOL blockage 222 blocks the dummy insertion utility from extending the horizontal FEOL dummy 218 to the vertical empty region 210. In this way, the horizontal FEOL dummy 218 is confined in the horizontal empty region 212 only. The horizontal FEOL dummy 218 may be an oxide diffusion (OD) dummy, a poly (PO) dummy, or a Cut Poly (CPO) dummy. That is, the horizontal FEOL dummy 218 may be formed using an OD layer, a PO layer, or a CPO layer.

The horizontal empty region 214 has a right end connected to the vertical empty region 210, and an FEOL blockage 224 is defined at the right end of the horizontal empty region 214. Hence, when the dummy insertion utility (which is a tool provided by the semiconductor foundry) automatically inserts a horizontal FEOL dummy 220 in the horizontal empty region 214, the FEOL blockage 224 blocks the dummy insertion utility from extending the horizontal FEOL dummy 220 to the vertical empty region 210. In this way, the horizontal FEOL dummy 220 is confined in the horizontal empty region 214 only. The horizontal FEOL dummy 220 may be an OD dummy, a PO dummy, or a CPO dummy. That is, the horizontal FEOL dummy 220 may be formed using an OD layer, a PO layer, or a CPO layer.

In this embodiment, due to inherent dummy insertion utility limitations, the dummy insertion utility does not start insertion of vertical FEOL dummies until insertion of all horizontal FEOL dummies is completed. Hence, after insertion of horizontal FEOL dummies 218 and 220 is completed, the dummy insertion utility (which is a tool provided by the semiconductor foundry) starts insertion of a vertical FEOL dummy 216 in the vertical empty region 210. With the aid of intentionally added FEOL blockages 222 and 224, the vertical empty region 210 has no partial areas occupied by horizontal FEOL dummies at the time when insertion of the vertical FEOL dummy 216 starts. In this way, the dummy insertion utility (which is a tool provided by the semiconductor foundry) can insert the vertical FEOL dummy 216 in the vertical empty region 210 successfully. It should be noted that the vertical FEOL dummy 216 is confined in the vertical empty region 210 only. As shown in FIG. 2, the horizontal FEOL dummy 218 is separated from the vertical FEOL dummy 216 at the left side of the horizontal empty region 212 (i.e., a position where FEOL blockage 222 is defined), and the horizontal FEOL dummy 220 is separated from the vertical FEOL dummy 216 at the right side of the horizontal empty region 214 (i.e., a position where FEOL blockage 224 is defined). The vertical FEOL dummy 216 may be an OD dummy, a PO dummy, or a CPO dummy. That is, the vertical FEOL dummy 216 may be formed using an OD layer, a PO layer, or a CPO layer.

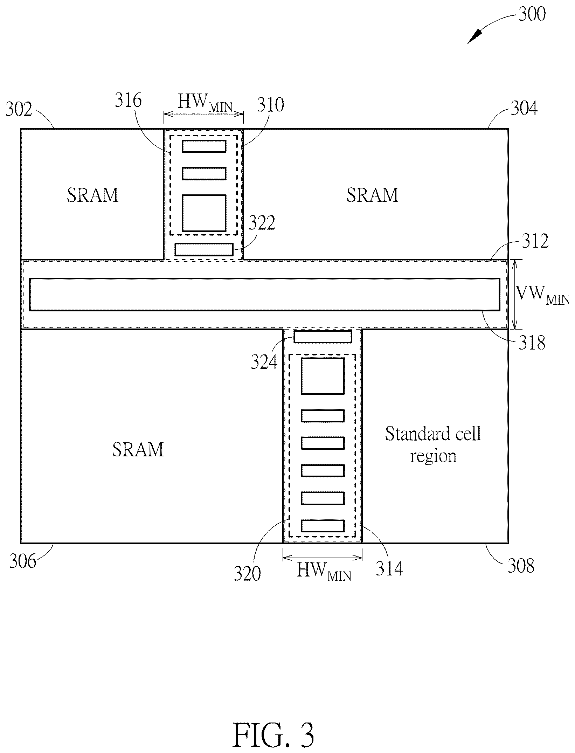

FIG. 3 is a diagram illustrating a second FEOL floorplan of an IC according to an embodiment of the present invention. The FEOL floorplan 300 includes FEOL components such as multiple SRAMs 302, 304, 306 and one standard cell region 308. However, this is for illustrative purposes only, and is not meant to be a limitation of the present invention. In practice, the present invention has no limitations on FEOL components included in the same FEOL floorplan. Since the FEOL components have different dimensions, there is a non-rectangle shaped empty region between FEOL components. In this embodiment, the non-rectangle shaped empty region includes a horizontal empty region 312 and two vertical empty regions 310 and 314. In addition, the horizontal empty region 312 has a minimum vertical width VW_{MIN} specified by design rules of the semiconductor foundry, and each of the vertical empty regions 310 and 314 has a minimum horizontal width HW_{MIN} specified by design rules of the semiconductor foundry.

The vertical empty region 310 has a bottom end connected to the horizontal empty region 312, and an FEOL blockage 322 is defined at the bottom end of the vertical empty region 310. Hence, when a dummy insertion utility (which is a tool provided by the semiconductor foundry) automatically inserts a vertical FEOL dummy 316 in the vertical empty region 310, the FEOL blockage 322 blocks the dummy insertion utility from extending the vertical FEOL dummy 316 to the horizontal empty region 312. In this way, the vertical FEOL dummy 316 is confined in the vertical empty region 310 only. The vertical FEOL dummy 316 may be an OD dummy, a PO dummy, or a CPO dummy. That is, the vertical FEOL dummy 316 may be formed using an OD layer, a PO layer, or a CPO layer.

The vertical empty region 314 has a top end connected to the horizontal empty region 312, and an FEOL blockage 324 is defined at the top end of the vertical empty region 314. Hence, when the dummy insertion utility (which is a tool provided by the semiconductor foundry) automatically inserts a vertical FEOL dummy 320 in the vertical empty region 314, the FEOL blockage 324 blocks the dummy insertion utility from extending the vertical FEOL dummy 320 to the horizontal empty region 312. In this way, the vertical FEOL dummy 320 is confined in the vertical empty region 314 only. The vertical FEOL dummy 320 may be an OD dummy, a PO dummy, or a CPO dummy. That is, the vertical FEOL dummy 320 may be formed using an OD layer, a PO layer, or a CPO layer.

In this embodiment, due to inherent dummy insertion utility limitations, the dummy insertion utility does not start insertion of horizontal FEOL dummies until insertion of all vertical FEOL dummies is completed. Hence, after insertion of vertical FEOL dummies 316 and 320 is completed, the dummy insertion utility (which is a tool provided by the semiconductor foundry) starts insertion of a horizontal FEOL dummy 318 in the horizontal empty region 312. With the aid of intentionally added FEOL blockages 322 and 324, the horizontal empty region 312 has no partial areas occupied by vertical FEOL dummies at the time when insertion of the horizontal FEOL dummy 318 starts. In this way, the dummy insertion utility (which is a tool provided by the semiconductor foundry) can insert the horizontal FEOL dummy 318 in the horizontal empty region 312 successfully. It should be noted that the horizontal FEOL dummy 318 is confined in the horizontal empty region 312 only. As shown in FIG. 3, the vertical FEOL dummy 316 is separated from the horizontal FEOL dummy 318 at the bottom side of the vertical empty region 310 (i.e., a position where FEOL blockage 322 is defined), and the vertical FEOL dummy 320 is separated from the horizontal FEOL dummy 318 at the top side of the vertical empty region 314 (i.e., a position where FEOL blockage 324 is defined). The horizontal FEOL dummy 318 may be an OD dummy, a PO dummy, or a CPO dummy. That is, the horizontal FEOL dummy 318 may be formed using an OD layer, a PO layer, or a CPO layer.

In summary, with the aid of intentionally added FEOL blockages, a dummy insertion utility (which is a tool provided by a semiconductor foundry) can do dummy insertion in a non-rectangle shaped empty region with minimum spacing (i.e., minimum horizontal width and minimum vertical width specified by design rules of the semiconductor foundry) successfully. In addition, the base layer PV is clean for minimum spacing of empty regions between FEOL components. Compared to the conventional approach that enlarges the empty region for accommodating FEOL dummies inserted by a dummy insertion utility provided by a semiconductor foundry, the proposed blockage-aided FEOL dummy insertion scheme can achieve die area saving as well as cost saving. Since there is no need to redo floorplan, placement, CTS, routing, and PV, the proposed blockage-aided FEOL dummy insertion scheme has no impact on time to market. Compared to the conventional approach that needs to redo the floorplan to enlarge the empty region, the proposed blockage-aided FEOL dummy insertion scheme can achieve shorter time to market.

## Claims

1. A front-end-of-line, FEOL, floorplan (200, 300) of an integrated circuit **characterized by**:
a plurality of FEOL components (202, 204, 206, 208, 302, 304, 306, 308);
a non-rectangle-shaped empty region, located between the plurality of FEOL components (202, 204, 206, 208, 302, 304, 306, 308), wherein the non-rectangle shaped empty region comprises:
a first empty region (212, 310), in a first direction; and
a second empty region (210, 312), in a second direction perpendicular to the first direction, wherein the first empty region (212, 310) has a first end connected to the second empty region (210, 312);
a first FEOL dummy (218, 316), inserted in the first empty region (212, 310); and
a second FEOL dummy (216, 318), inserted in the second empty region (210, 312), wherein the first FEOL dummy (218, 316) is separated from the second FEOL dummy (216, 318) at the first end of the first empty region (212, 310).

2. The FEOL floorplan (200, 300) of claim 1, **characterized in that** the first empty region (212, 310) has a minimum width specified by design rules of a semiconductor foundry, or the second empty region (210, 312) has a minimum width specified by design rules of a semiconductor foundry.

3. The FEOL floorplan (200, 300) of any one of claims 1 or 2, **characterized in that** the second empty region (210, 312) has a minimum width specified by design rules of a semiconductor foundry.

4. The FEOL floorplan (200, 300) of any one of claims 1 to 3, **characterized in that** the first FEOL dummy (218, 316) is separated from the second FEOL dummy (216, 318) by an FEOL blockage (222, 322) defined at the first end of the first empty region (212, 310).

5. The FEOL floorplan (200, 300) of any one of claims 1 to 4, **characterized in that** the non-rectangle shaped empty region further comprises:
a third empty region (214, 314), in the first direction, wherein the third empty region (214, 314) has a first end connected to the second empty region (210, 312); and
the FEOL floorplan (200, 300) further comprises:
a third FEOL dummy (220, 320), inserted in the third empty region (214, 314), wherein the third FEOL dummy (220, 320) is separated from the second FEOL dummy (216, 318) at the first end of the third empty region (214, 314).

6. The FEOL floorplan (200, 300) of any one of claims 1 to 5, **characterized in that** the first FEOL dummy (218, 316) is an oxide diffusion dummy, a poly dummy, or a Cut Poly dummy; or
wherein the second FEOL dummy (216, 318) is an oxide diffusion dummy, a poly dummy, or a Cut Poly dummy.

7. The FEOL floorplan (200, 300) of any one of claims 1 to 6, **characterized in that** the first direction is a horizontal direction of the FEOL floorplan (200, 300), and the second direction is a vertical direction of the FEOL floorplan (200, 300).

8. The FEOL floorplan (200, 300) of any one of claims 1 to 7, **characterized in that** the first direction is a vertical direction of the FEOL floorplan (200, 300), and the second direction is a horizontal direction of the FEOL floorplan (200, 300).

9. A method of designing a front-end-of-line, FEOL, floorplan (200, 300) of an integrated circuit **characterized by**:
defining a plurality of FEOL components (202, 204, 206, 208, 302, 304, 306, 308) in the FEOL floorplan (200, 300), wherein a non-rectangle-shaped empty region is located between the plurality of FEOL components (202, 204, 206, 208, 302, 304, 306, 308), and comprises:
a first empty region (212, 310), in a first direction; and
a second empty region (210, 312), in a second direction perpendicular to the first direction, wherein the first empty region (212, 310) has a first end connected to the second empty region (210, 312);
defining a first FEOL blockage (222, 322) at the first end of the first empty region (212, 310); and
running a dummy insertion utility to automatically insert a first FEOL dummy (218, 316) and a second FEOL dummy (216, 318), wherein the first FEOL blockage (222, 322) assists the dummy insertion utility in inserting the first FEOL dummy (218, 316) in the first empty region (212, 310) only.

10. The method of claim 9, **characterized in that** the first empty region (212, 310) has a minimum width specified by design rules of a semiconductor foundry.

11. The method of any one of claims 9 or 10, **characterized in that** the second empty region (210, 312) has a minimum width specified by design rules of a semiconductor foundry.

12. The method of any one of claims 9 to 11, **characterized in that** the non-rectangle shaped empty region further comprises:
a third empty region (214, 314), in the first direction, wherein the third empty region (214, 314) has a first end connected to the second empty region (210, 312); and
the method further comprises:
defining a second FEOL blockage (224, 324) at the first end of the third empty region (214, 314); and
running the dummy insertion utility to automatically insert a third FEOL dummy (220, 320), wherein the second FEOL blockage (224, 324) assists the dummy insertion utility in inserting the third FEOL dummy (220, 320) in the third empty region (214, 314) only.

13. The method of any one of claims 9 to 12, **characterized in that** the first FEOL dummy (218, 316) is an oxide diffusion dummy, a poly dummy, or a Cut Poly dummy; or
wherein the second FEOL dummy (216, 318) is an oxide diffusion dummy, a poly dummy, or a Cut Poly dummy.

14. The method of any one of claims 9 to 13, **characterized in that** the first direction is a horizontal direction of the FEOL floorplan (200, 300), and the second direction is a vertical direction of the FEOL floorplan (200, 300).

15. The method of any one of claims 9 to 14, **characterized in that** the first direction is a vertical direction of the FEOL floorplan (200, 300), and the second direction is a horizontal direction of the FEOL floorplan (200, 300).
